# EUROPEAN PATENT SPECIFICATION

(11) **EP 2 559 173 B1**
(45) Date of publication and mention of the grant of the patent: **16.09.2015**
(21) Application number: 10715202.7
(22) Date of filing: 13.04.2010
(51) Int. Cl.: H04J 14/02, H04J 14/06, H04B 10/516

(54) **METHOD AND DEVICE FOR TRANSMISSION AND RECEPTION OF A POLARIZATION MULTIPLEXED OPTICAL SIGNAL**
VERFAHREN UND VORRICHTUNG FÜR DIE ÜBERTRAGUNG UND DEN EMPFANG EINES OPTISCHEN MULTIPLEX-POLARISATIONSSIGNALS
PROCÉDÉ ET DISPOSITIF POUR LA TRANSMISSION ET LA RÉCEPTION D'UN SIGNAL OPTIQUE MULTIPLEXÉ DE POLARISATION

(43) Date of publication of application: 20.02.2013
(73) Proprietor: Xieon Networks S.à r.l., 2663 Senningerberg (LU)
(72) Inventor: JANSEN, Sander, 81379 München (DE); STRIEGLER, Arne, 80469 München (DE); VAN DEN BORNE, Dirk, 81379 München (DE); SLEIFFER, Vincentius Antonius Johannes Mar, NL-6691DR Gendt (NL)
(74) Representative: Lucke, Andreas
(86) International application number: PCT/EP2010/054783
(87) International publication number: WO 2011/127959

(56) References cited:
- EP-A1- 2 066 044
- WO-A1-00/27054
- WO-A1-03/044992
- WO-A2-01/95490
- US-A1- 2003 090 760
- US-A1- 2007 274 728
- US-A1- 2010 086 303
- US-B1- 6 459 515

## Description

The invention relates to a method and to a device for data processing in an optical network..

In optical communication networks, high spectral efficiency (determined in (bits/s) /Hz) is a key parameter for a cost-efficient network operation. For this reason, modulation formats such as differential phase shift keying (DPSK) or quadrature phase shift keying (QPSK) can be used to provide a robust, spectral efficient transmission system. The spectral efficiency can be further increased via polarization multiplexing (POLMUX); in particular, e.g., polarization multiplexed QPSK (POLMUX-QPSK).

POLMUX-QPSK with coherent detection is a modulation format that can be utilized in next-generation networks as it has advantages like high tolerance towards accumulated chromatic dispersion (CD) and polarization mode dispersion (PMD) in combination with a high spectral efficiency.

However, modulation formats enhancing the spectral efficiency get increasingly susceptible to signal distortions induced by nonlinear effects on the optical fiber. Effects such as self-and cross-phase modulation and four-wave mixing result in distortions and may thus limit the reach of the signals. This leads to high costs for the customers, because the signal has to be regenerated by additional hardware (e.g., expensive regenerators). Such high costs contravene with the previously mentioned goal of avoiding costs by increasing the overall spectral efficiency.

European patent application EP 2 066 044 A1 discloses a transmitter for a fiberoptics multicarrier modulation transmission system that generates an optical OFDM wherein the sub-carriers of the OFDM signal differ in their polarization and frequency.

US patent application US 2010/0086303 A1 discloses a polarization multiplexed optical OFDM transmitter, wherein a first and a second optical carriers of different frequency are respectively associated to first and second OFDM signals, wherein said OFDM signals are spectrally located between said first and second carriers, and wherein said first and second sets of signals have respective orthogonal polarizations.

Further examples for optical transmitters adapted to generate polarization multiplexed optical signals whose orthogonal polarization components have different carrier frequencies, are de-scribed in international publication WO 03/044992 A1, US patent application US 2003/090760 A1, US patent publication US 6 459 515 B1, US patent application

US 2007/274728 A1, and international application WO 00/27054 A1.

The problem to be solved is to avoid the disadvantages mentioned above and in particular to reduce the overall network costs by increasing the maximum reach without any need for signal regeneration.

This problem is solved according to the features of the independent claims. Further embodiments result from the depending claims.

In order to overcome this problem, a method for data processing in an optical communication network is suggested,
- wherein a first carrier of a first polarization and a second carrier of a second polarization are provided at different frequencies.

The first carrier and the second carrier are part of a modulation utilizing polarization multiplexing. The first carrier is associated with a first OFDM signal and the second carrier is associated with a second OFDM signal. According to the invention, the first carrier and the second carrier are located within the spectrum on the same side with regard to the first OFDM signal and the second OFDM signal.

Hence, the frequencies of the first and second carriers may be lower than the frequencies of OFDM signals. As an alternative, the frequencies of the first and second carriers may be higher than the frequencies of OFDM signals.

The approach provided allows polarization multiplexing with a carrier offset. It is noted that several polarizations can be supplied, wherein at least two of the several polarizations have carriers at different frequencies.

Advantageously, distortions by non-linear effects between the two polarization planes can be reduced by introducing an offset of the carrier frequency of the two polarization planes.

The two polarization portions of a signal are thus shifted in time by chromatic dispersion during the transmission. Interchannel non-linear effects can be reduced by providing an increased channel spacing and dispersion. Furthermore, cross-polarization effects can also be significantly reduced by this approach of different carrier frequencies.

This approach also enables PDM-OFDM with direct detection by using a frequency shift between carriers of different polarizations.

It is an advantage that no polarization needs to be tracked at the receiver. In addition, without such need for alignment of active polarizations, the operation is robust and stable. Also, the implementation is cost-efficient and spectrally efficient. In case a guard band is required between the optical carrier and the OFDM signal, only one such guard band is needed.

In an embodiment, the modulation comprises a modulation format using two polarization planes, in particular at least one of the following:
- polarization multiplexing PSK, in particular polarization multiplexing QPSK or polarization multiplexing DPSK or polarization multiplexing DQPSK;
- polarization multiplexing QAM;
- OFDM.

In a further embodiment, the carriers of different frequencies are provided each by a separate light source, e.g., utilized in a transmitter of the optical communication network.

The light source can be a laser, in particular a CW-laser.

In a next embodiment, the carriers of different frequencies are provided by a single light source wherein the light signal of the single light source is split into two parts,
- wherein to the first part of the light signal a linear increasing phase shift over time can be added in particular by a first Mach-Zehnder modulator; and
- wherein to the second part of the light signal a linear decreasing phase shift over time can be added in particular by a second Mach-Zehnder modulator.

Hence, frequency shifts in opposite directions can be realized together with the carrier offset. Such an additional modulator stage can be combined with an optional pulse carver (in case a RZ signal is required). It is noted that the carrier offset may be achieved by different modulators as the Mach-Zehnder modulator indicated above.

It is noted that a portion of the linear increasing phase shift over time can be added to the first part of the light signal. For example, a serrated signal can be used to provide such portion of linear increasing phase shift over time (for a predefined period of time).

It is also an embodiment that a frequency of a local oscillator at a receiver is adjusted substantially at or around the middle between the first carrier frequency and the second carrier frequency.

It is noted that the frequency of the local oscillator at the receiver can be adjusted somewhere in the frequency range between the first and second carrier frequencies.

Pursuant to another embodiment, information regarding the frequency of the local oscillator is conveyed to the receiver.

The information of the frequency offset amounting to +/-Δf can be supplied to the signal processing stage of a receiver. Hence, only minor adaption of the receiver's software is required.

In yet another embodiment, the first carrier and the second carrier are utilized for polarization division multiplexing, in particular for DDO-OFDM.

According to a next embodiment, the frequency shift between the first carrier and the second carrier is larger than a linewidth of a signal provided by an optical light source, in particular a laser.

Pursuant to yet an embodiment, the frequency shift between the first carrier and the second carrier is provided by an acousto-optic modulator.

Hence, two OFDM signals can be modulated onto optical carriers and multiplexed onto orthogonal polarizations by, e.g., a polarization beam splitter. The frequency shift between the polarizations can be provided via such acousto-optic modulator, which can be inserted before or after one of the optical modulators. The acousto-optic modulator may provide a frequency shift of several tens of megahertz, which may suffice to separate the frequencies of the two polarizations.

The problem stated above is also solved by an optical network element comprising at least one component that provides a first carrier of a first polarization and a second carrier of a second polarization at different frequencies, wherein the first carrier and the second carrier are part of a modulation utilizing polarization multiplexing, wherein the first carrier is associated with a first OFDM signal and the second carrier is associated with a second OFDM signal. The optical network element is adapted to provide the first carrier and the first OFDM signal and to provide the second carrier and the second OFDM signal such that the first carrier and the second carrier are located within the spectrum on the same side with regard to the first OFDM signal and the second OFDM signal.

According to an embodiment, the at least one component comprisesa delay element, in particular an acousto-optic modulator, within a branch of a modulator, in particular of a Mach-Zehnder modulator.

Pursuant to another embodiment, said device is a transmitter of a receiver of the optical network.

Furthermore, the problem stated above is solved by a communication system comprising at least one device as described herein.

Embodiments of the invention are shown and illustrated in the following figures:
- Fig.1: shows a schematic block diagram of a POLMUX-RZ-DQPSK transmitter structure with two- and four-dimensional constellation diagrams;
- Fig.2: shows a schematic block diagram of a coherent receiver processing the POLMUX-RZ-DQPSK signals conveyed by the transmitter shown in Fig.1;
- Fig.3: shows a schematic block diagram of the offline signal processing block as indicated in Fig.2;
- Fig.4A: shows a diagram visualizing CO-POLMUX without carrier offset;
- Fig.4B: shows a diagram visualizing CO-POLMUX with carrier offset;
- Fig.5: shows a schematic block diagram of a transmitter for CO-POLMUX modulation;
- Fig.6: shows a schematic frequency range to visualize transmission and detection of a single polarization DDO-OFDM system;
- Fig.7: shows a schematic diagram visualizing a concept of a PDM transmission system with direct detection and MIMO processing at a receiver;
- Fig.8: shows a schematic block diagram visualizing a different approach that allows PDM with direct detection;
- Fig.9A: shows an optical spectrum of two polarizations that may in particular be used for PDM in the area of DDO-OFDM, wherein optical carriers for both polarizations are located at the same frequency, which requires exact alignment of the polarization with the PBS at the receiver;
- Fig.9B: shows an optical spectrum of two polarizations that may in particular be used for PDM in the area of DDO-OFDM, wherein each OFDM signal has its own optical carrier, which carriers are mirrored with respect to the center of the OFDM signals;
- Fig.9C: shows an optical spectrum of two polarizations that may in particular be used for PDM in the area of DDO-OFDM, wherein a frequency shifted PDM is used with an OFDM signal (of a first polarization) and its carrier being shifted by a (small) frequency offset with regard to an OFDM signal (of a second polarization) and its carrier;
- Fig.10: shows a schematic block diagram visualizing an exemplary implementation of a frequency-shifted PDM-DDO-OFDM.

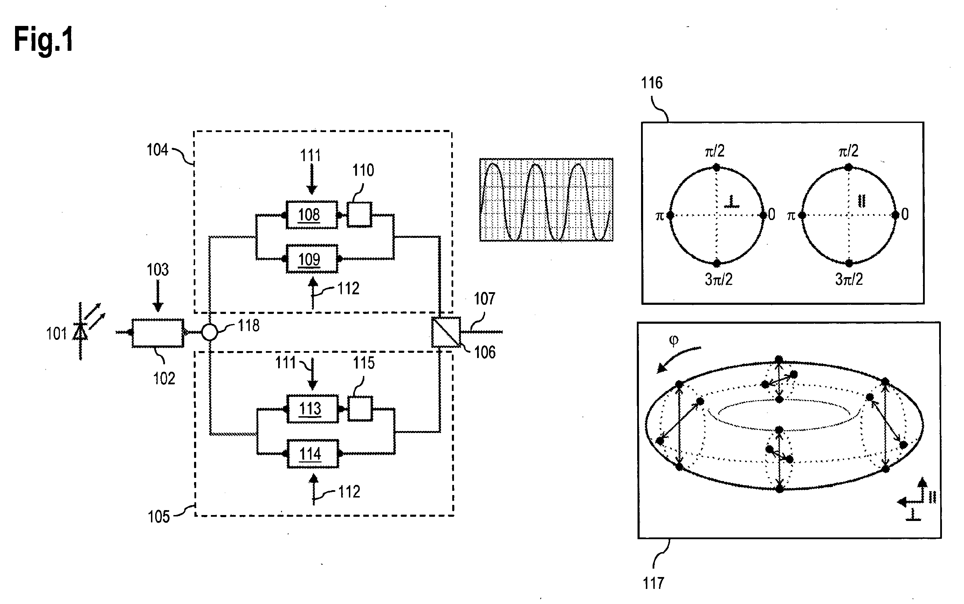

A next generation product based on a POLMUX-QPSK modulation format will exemplarily be described hereinafter. **Fig.1** shows a schematic block diagram of a POLMUX-RZ-DQPSK transmitter structure with two- and four-dimensional constellation diagrams 116, 117.

A signal from a light source 101 (e.g., a CW-laser) is fed to a Mach-Zehnder-Modulator MZM 102 where it is modulated with an electrical signal 103, e.g. a substantially sinusoidal signal. The output of the MZM 102 is split to a branch 104 and to a branch 105. The outputs of the branches 104, 105 are combined by a polarization beam splitter PBS 106, which provides a modulated output signal 107.

The branch 104 comprises two parallel MZMs 108, 109, wherein the MZM 108 is connected with a (π/2) phase shifter 110. At the MZM 108, a modulation with an electrical signal 111 (also referred to as precoded I-signal) is conducted and at the modulator MZM 109, a modulation with an electrical signal 112 (also referred to as precoded Q-signal) is conducted.

The branch 105 comprises two parallel MZMs 113, 114, wherein the MZM 108 is connected with a (π/2) phase shifter 115. At the MZM 113, a modulation with the electrical signal 111 is conducted and at the modulator MZM 114, a modulation with the electrical signal 112 is conducted.

As can be seen from the two-dimensional constellation diagrams 116, the transmitter of POLMUX-RZ-DQPSK provides a similar signal as does a common DQPSK modulator. The transmitter of Fig.1 provides two structures, one for each polarization. To obtain return-to-zero (RZ), a so-called pulse carver can be added after the CW-laser. This pulse-carver, according to the example of Fig.1, is realized by the MZM 102. The signal from the pulse carver is split up into the two branches 104, 105, by, e.g., using a 3dB splitter 118. Both branches 104, 105 are separately DQPSK-modulated using a common QPSK-modulator. After modulation, the two DQPSK-modulated signals are combined by the PBS 106, which multiplexes the signals from the branches 104, 105 onto orthogonal polarizations. In an eye diagram, the effect of the pulse carver can be determined as the output of the transmitter contains pulses. Every pulse (the middle) carries two phases of the two distinct signals. In total 16 combinations are possible. The rate of pulses equals the total bitrate divided by four. This means that one symbol contains information of 4 bits, thus resulting in 4 bits per symbol.

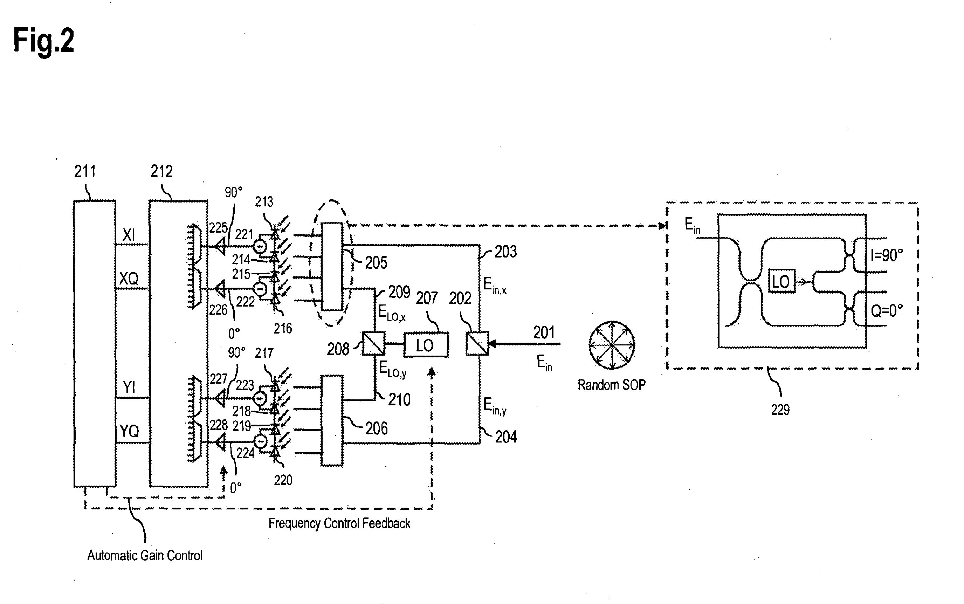

There are multiple ways to receive the POLMUX-RZ-DQPSK signal. Hereinafter, as an example, a polarization-diversity intra-dyne receiver detection is described. Fig.2 shows a schematic block diagram of a coherent receiver processing the POLMUX-RZ-DQPSK signals conveyed by the transmitter shown in Fig.1 and described above.

An incoming signal 201 is split by a PBS 202 into two orthogonal polarization components E_{in,x} 203 and E_{in,y} 204, which are a mixture of the two original signals as originally transmitted. Both polarization components 203, 204 are fed to a 90° optical hybrid 205, 206, where they are mixed with an output signal of a LO-laser 207. For that purpose, the signal of the LO-laser 207 is fed to a PBS 208, where it is split into a component E_{LO,x} 209 and a component E_{LO,y} 210. The component 209 is conveyed to the 90° optical hybrid 205 and the component 210 is conveyed to the 90° optical hybrid 206. It is noted that the optical hybrids 205, 206 is in detail summarized by a block 229.

The LO-laser 207 may be a free-running laser and it may be aligned with the transmitter laser within a frequency range of several hundred megahertz. This alignment can be controlled by a digital signal processing (DSP) that could be deployed in an offline signal processing block 211. The permissible frequency range of the LO-laser 207 depends on the DSP algorithms used for carrier phase estimation (CPE).

Mixing the signal of the LO-laser 207 and the received signal 201 (i.e. the components 203, 204) in the 90° hybrids 205, 206 results in in-phase (I) and quadrature (Q) components, which are then fed to photodiodes 213 to 220, which can be single-ended or balanced photodiodes (depending on, e.g., a complexity and/or a cost-efficiency of a particular scenario).

Distortions from direct detected signal components can be minimized by using a high LO-to-signal power ratio. Hence, the signals from the photodiodes 213 to 220 are combined (via elements 221 to 224) and amplified (via amplifiers 225 to 228). Then, the amplified signals are digitized by analog-to-digital converters (ADCs) of a unit 212. The output of this unit 212 can be processed by the previously mentioned DSP to recover the bit streams originally transmitted.

The offline signal processing block 211 may control the gain of the drivers 225 to 228 and/or adjust the frequency of the LO-laser 207.

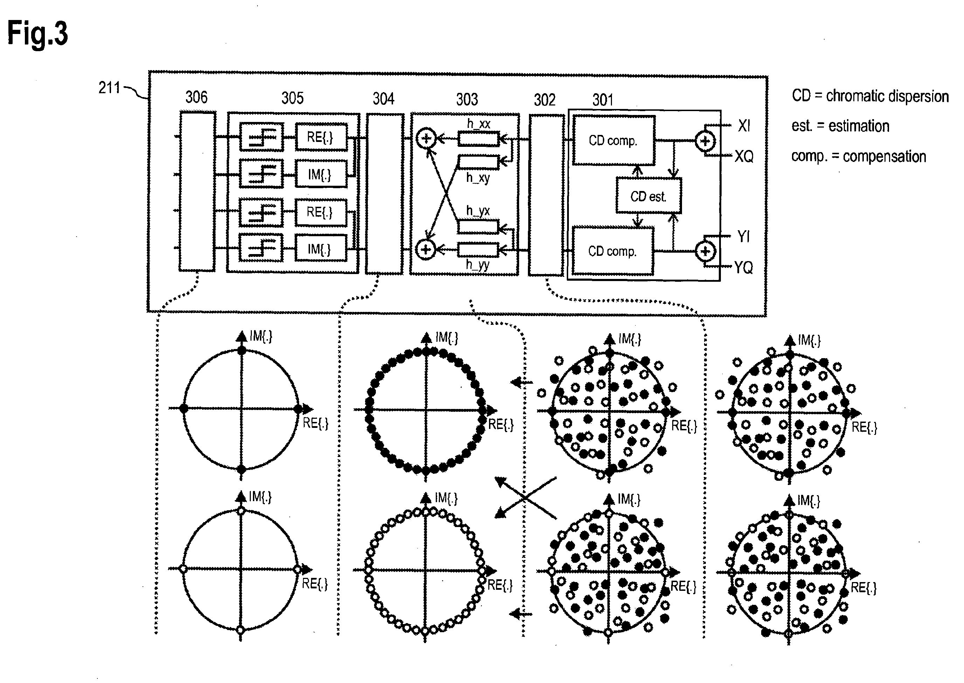

Fig.3 shows a schematic block diagram of the offline signal processing block 211. Such digital processing may be conducted in the electrical domain of the coherent receiver shown in Fig.2.

The signals fed to the offline signal processing block 211 are conveyed to a frequency domain equalization (FDE) stage 301, which is applied to estimate and compensate an accumulated chromatic dispersion (CD) along the optical link. The FDE is followed by a clock recovery 302 and a time domain equalization (TDE) stage 303 to compensate the DGD/PMD, i.e. a residual CD after FDE and demultiplexing of the two polarizations.

In the FDE stage 301 the signal is transferred into the frequency domain using FFT. The frequency domain is better suited to compensate for the CD, because here the inverse linear part of the Schrödinger equation can be applied. After CD compensation in the FDE stage 301, the signal is transformed back to the time domain using IFFT. As CD compensation is applied per polarization (see Fig.3), the FDE stage 301 is not able to demultiplex the polarizations. Before the TDE stage 303, the clock recovery 302 is conducted.

During the propagation along the optical fiber the transmitted signal accumulates noise and the two polarizations experience CD and PMD as well as intermixing effects between them. The polarizations E_{in,x} and E_{in,y} are a mixture of the two original signals as originally transmitted. The PBS 202 splits the received signal 201 in two (arbitrary) orthogonal polarization components 203, 204.

If all signal impairments are assumed to be linear, a matrix H (transfer function) can be determined, which may be an approximation of the inverse matrix H to reverse the linear effects of the channel. The matrix H can be summarized as H = [hₓₓ h_{yx}; h_{xy} h_{yy}], which is represented by the butterfly structure of the TDE stage 303 shown in Fig.3. Multiplying the received signal with the transfer function H an approximation of the transmitted signal can be determined. Hence, the TDE stage 303 can compensate for the residual CD, PMD and demultiplex the two polarizations.

In theory the CD may (substantially) totally be compensated in this TDE stage 303; however such compensation requires extensive calculations. It is also possible to determine the transfer function H using methods such as the constant modulus algorithm (CMA) or the least mean square (LMS) algorithm. Using these algorithms, the coefficients of the transfer function H can be adapted over time to be able to track fast changes regarding the polarization state of the signal or changes of the channel characteristics.

The TDE stage 303 may provide a limited tolerance towards nonlinear impairments. After the TDE stage 303, the signal is processed by a carrier recovery 304, which corrects an offset in frequency and phase between the transmitter and LO-laser 207 (e.g., by using the Viterbi-and-Viterbi algorithm). A frequency offset can be estimated by integrating the phase change over a large number of symbols or by estimating the shift in the frequency domain. After the frequency offset is reduced or (in particular substantially) removed, carrier phase estimation (CPE) is applied to remove the phase offset. Next, a digital decision is made on the symbols using a slicer 305. Then, a DQPSK decoder 306 determines the resulting bit stream.

Fig.3 also visualizes constellations that could be associated with the various processing stages as indicated.

The approach provided herein in particular improves polarization multiplexed modulation formats. It can in particular be used with regard to POLMUX-QPSK or any other polarization multiplexed modulation, e.g., POLMUX-DPSK or POLMUX-QAM.

The modulation format suggested herein is also referred to as Carrier-Offset POLMUX (CO-POLMUX).

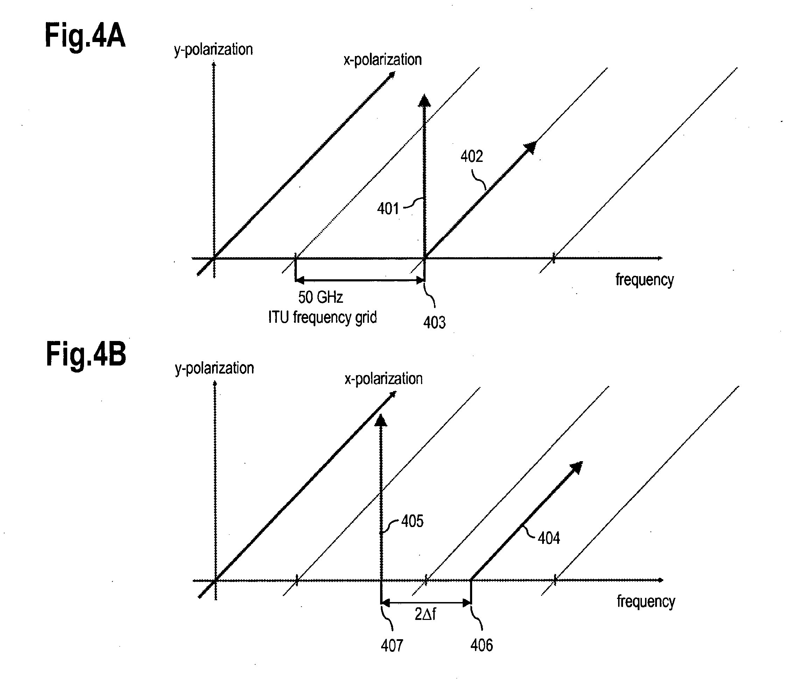

Fig.4A shows a diagram visualizing CO-POLMUX without carrier offset and Fig.4B shows a diagram visualizing CO-POLMUX with carrier offset.

Distortions by non-linear effects between the two polarization planes can be reduced by introducing an offset of the carrier frequency of the two polarization planes.

As shown in **Fig.4A** the signal comprises an x-polarization 402 and a y-polarization 403 at an identical carrier frequency 403.

In contrast to Fig.4A, **Fig.4B** visualizes CO-POLMUX-QPSK modulation, wherein a signal comprises an x-polarization portion 404 at a carrier frequency 406 and a y-polarization portion 405 at a carrier frequency 407, wherein the carrier frequencies 406 and 407 are not identical and can be separated from each other by 2Δf.

As a result, the two polarization portions of the signal will be shifted in time by chromatic dispersion during the transmission. Hence, intra-channel non-linear effects are reduced. Basically, inter-channel non-linear effects can be reduced by providing an increased channel spacing and dispersion. Furthermore, cross-polarization effects can also be significantly reduced by this approach of different carrier frequencies.

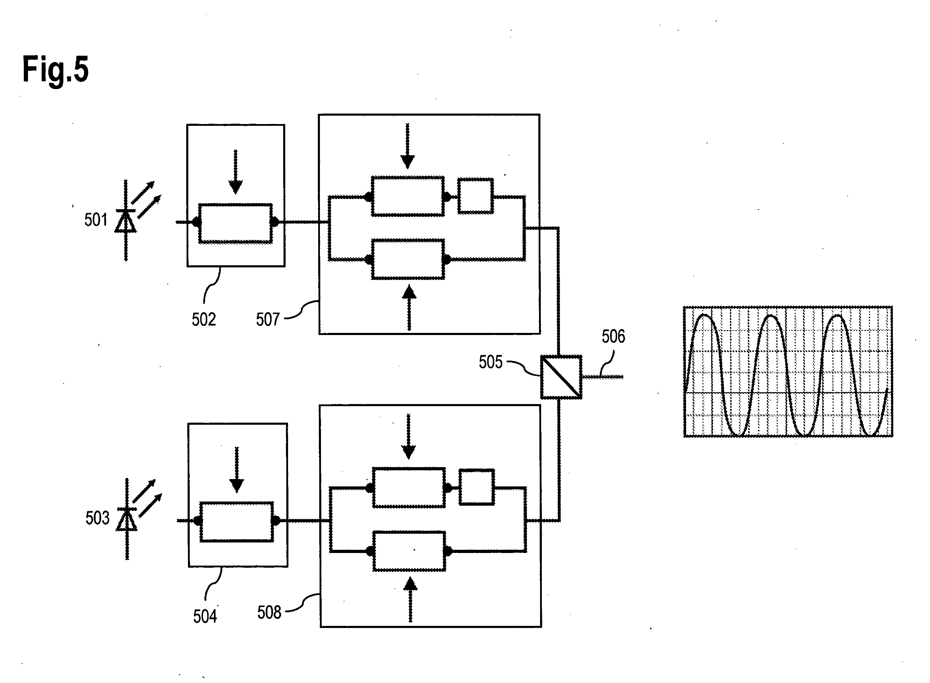

Fig.5 shows a schematic block diagram of a transmitter for CO-POLMUX modulation. A CW-laser 501 provides a light signal to a pulse carver 502 (which may be realized as a MZM that modulates an electrical sinusoidal signal), wherein the output of the pulse carver 502 is fed to a modulation block 507 that corresponds to the modulation branch 104 as shown in Fig.1. A second CW-laser 502 provides a light signal to a pulse carver 504 (which may be realized as a MZM that modulates an electrical sinusoidal signal), wherein the output of the pulse carver 504 is fed to a modulation block 508 that corresponds to the modulation branch 105 as shown in Fig.1. The output of the modulation blocks 507 and 508 are combined by a PBS 505, which supplies a modulated output signal 506.

In Fig.5, the carrier offset is facilitated by the CW-laser 503. The CW-laser 501 and the CW-laser 503 may be driven with a frequency offset amounting to 2Δf.

The pulse carvers 502, 504 are optional and can be added in case a RZ signal instead of an NRZ signal is required.

As an alternative, the carrier offset can be supplied by a single light source (CW-laser) as well. In such scenario, the light signal is split into two parts, wherein to the first part of the light signal a linear increasing phase shift over time can be added by a MZM and to the second part a linear decreasing phase shift over time can be added by a MZM. Hence, frequency shifts in opposite directions can be realized together with the carrier offset. Such an additional modulator stage can be combined with the optional pulse carver; this allows saving of two MZMs.

Advantageously, the receiver hardware may be maintained unchanged. The frequency of the local oscillator could be kept in the middle between the two frequency carriers. The information of the frequency offset amounting to +/-Δf is-supplied to the signal processing stage (e.g., the Viterbi algorithm). Hence, a minor adaption of the receiver's software enables the modulation scheme as suggested herein.

### Further Advantages:

The CO-POLMUX-DQPSK suggested is more robust towards non-linear effects and the reach can be significantly improved.

Carrier offset can be achieved by adding a second light source, e.g., a CW-laser. This is a cost-efficient solution and can be implemented easily.

The carrier offset approach described herein can in particular be applied for every POLMUX modulation format, e.g., POLMUX-DPSK, POLMUX-QAM.

In particular in combination with fiber types of low dispersion coefficient, non-linear cross polarization effects can be significantly reduced.

### OFDM:

Orthogonal frequency division multiplexing (OFDM) is a promising method to eliminate a need for optical dispersion compensation in fiber-optic transmission links. Optical OFDM systems can be realized either with direct detection optical (DDO) or with coherent optical detection. For cost effective metro and access applications, DDO-OFDM is a promising solution as DDO-OFDM requires the least optical and electrical components at the transmitter as well as the receiver. Furthermore, the complexity of the digital equalization at the receiver is less demanding.

In realizing a cost-effective high data rate transponder (e.g., 40 Gbps or 100 Gbps), a remaining challenge is to realize the high-bandwidth DACs and ADCs that are required to generate and detect the OFDM signal, respectively. An efficient way to reduce the bandwidth requirements of both DAC and ADC is by using polarization division multiplexing (PDM) and sending two times half the data rate in two polarizations instead of one time the full data rate in a single polarization.

However, for a DDO-OFDM signal, the use of PDM is not straightforward as an active polarization controller may be required at the transmitter to align the PDM signal with the principle axis of a polarization beam splitter so that the two polarization multiplexed signals can be separated.

It is thus also an object referred to herein to avoid the need of active polarization alignment at the receiver to enable a cost-effective PDM-DDO-OFDM modulation and detection.

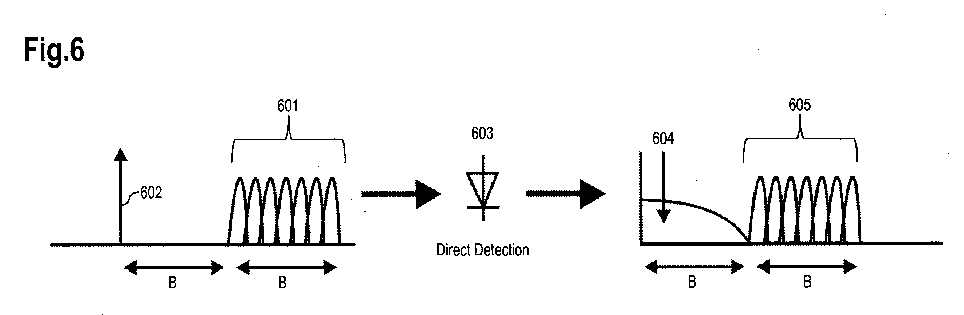

**Fig.6** shows a schematic frequency range to visualize transmission and detection of a single polarization DDO-OFDM system. An OFDM signal 601 is transmitted together with an optical carrier 602, wherein the optical carrier 602 can be spaced at a bandwidth B from the OFDM signal 601. The bandwidth B may correspond to the bandwidth of the OFDM signal 601 itself.

A conversion from the optical domain to the electrical domain at a receiver is achieved by using a photodiode 603. At the photodiode 603, all optical signals mix with each other and as such an electrical spectrum (comprising subcarrier intermixing products 604 and an OFDM signal 605) is obtained. From a frequency range starting at f=0 to f=B, mixing products of the OFDM subcarriers with itself are present, which is referred to as subcarrier intermixing products 604, which are unwanted and can be (substantially) removed by a high pass filter that is placed after the photodiode 603. From a frequency range starting at f=B to f=2B, the OFDM signal 605 is present. This signal is generated by mixing the optical carrier and the OFDM signal at the photodiode. This is the required signal to be used for further processing.

In metro and access markets, a promising application for PDM-DDO-OFDM is to provide cost-effective and robust 40 Gbps and 100 Gbps linecards that can operate on a single wavelength. In a PDM-DDO-OFDM system, a 40 Gbps linecard can be implemented using inexpensive 10 Gbps electronic components in case QPSK coding is used. By scaling up the constellation size to 16 QAM or more, the same 10 Gbps electronic components can be used to increase the data rate of the linecard to 100 Gbps. However, scaling up the constellation size reduces the tolerance of the linecard with respect to amplifier noise, which (in particular for metro applications) may not be a limiting factor.

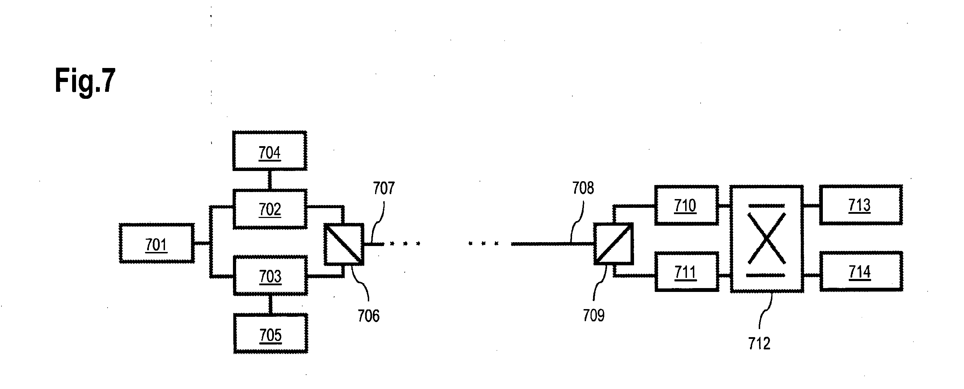

**Fig.7** shows a schematic diagram visualizing a concept of a PDM transmission system with direct detection and MIMO processing at a receiver.

A laser diode 701 provides a light signal that is fed (e.g., via a splitter, not shown in Fig.7) to a modulator 702 and to a modulator 703. The output signals of the modulators 702, 703 are combined by a PBS 706 to a modulated signal 707 that is fed to a transmission line (e.g., fiber). A signal of a baseband transmitter 704 is fed to the modulator 702 and a signal of a baseband transmitter 705 is fed to the modulator 703 in order to modulate an electrical signal onto the light signal provided by the laser diode 701.

At the receiver, an incoming signal 708 is fed to a PBS 709 and conveyed to photodiodes 710 and 711, wherein the electrical signal of the photodiodes 710, 711 is fed to a MIMO processing stage 712, which conveys the processed signals to a receiver 713 and to a receiver 714.

At the transmitter, two OFDM signals generated by the baseband transmitter 704 and the baseband transmitter 705, are modulated onto the light signal (i.e. an optical carrier) supplied by the laser diode 701. Then, the two OFDM signals are multiplexed onto orthogonal polarizations by the PBS 706.

At the receiver, the polarization of the received signal 708 is aligned with that of the PBS 709 so that the optical carrier of the OFDM signal hits the PBS 709 at a 45 degree angle to the PBS. Only in such case, the photodiodes 710, 711 at the outputs of the PBS 709 receive the same optical carrier-to-OFDM-signal-ratio and thus the same SNR performance (not considering polarization dependent losses). After the photodiodes 710, 711, MIMO processing is applied to de-rotate the polarization and separate the two received signals (see MIMO processing stage 712). Next, the two de-rotated signals are converted to binary data streams by the two baseband receivers 713, 714.

This approach bears the disadvantage that an active polarization control is required at the receiver in order to keep the optical carrier of the OFDM signal at 45 degrees of the PBS. The polarization needs to be tracked at a millisecond and sometimes even microsecond scale. This puts strict requirements on the polarization controller as well as a tracking algorithm to be used.

A single wavelength is polarized and therefore exists in one polarization. The main problem of conventional PDM concepts is thus based on the fact that the optical carrier (see Fig.6) is an un-modulated wavelength that is the same for both polarizations, wherein mixing the two polarization tributaries together at the transmitter (see Fig.7) only provides a polarization rotation to the optical carrier. Randomly splitting the polarization multiplexed signal by a PBS at the receiver in most cases does not equally split the optical carrier in two components. However, if the optical carrier at the receiver is not equally split, the performance at the receiver will not be optimal as the SNR of the two receivers connected to the PBS will be different. Therefore, active polarization alignment is required in the conventional PDM concept to split the optical carrier at the receiver PBS at 45 degrees so that the received optical power per receiver 713, 714 is (substantially) the same.

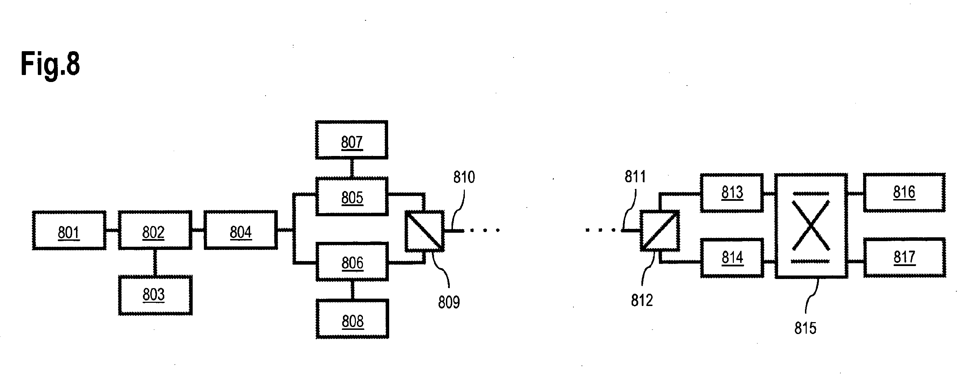

**Fig.8** shows a schematic block diagram visualizing a different approach that allows PDM with direct detection.

A laser diode 801 provides a light signal that is fed to a modulator 802 where it is modulated with an RF signal 803. The output of the modulator 802 is fed to and processed by an interleaver 804 and (after processing) conveyed to a modulator 805 and to a modulator 806. The output signals of the modulators 805, 806 are combined by a PBS 809 to a modulated signal 810 that is fed to a transmission line (e.g., fiber). A signal of a baseband transmitter 807 is fed to the modulator 805 and a signal of a baseband transmitter 808 is fed to the modulator 806 in order to modulate electrical signals onto the light signal provided by the laser diode 801.

At the receiver, an incoming signal 811 is fed to a PBS 812 and conveyed to photodiodes 813 and 814, wherein the electrical signal of the photodiodes 813, 814 is fed to a MIMO processing stage 815, which conveys the processed signals to a receiver 816 and to a receiver 817.

In this architecture, the output of the laser diode 801 is RZ pulse carved with the RF signal 803 (e.g., a sinusoidal signal) in order to create two tones that are spaced from each other with twice the frequency of the RF signal 803. The interleaver 804 may be realized as a Mach-Zehnder delay interferometer (MZDLI) and can be used to separate these two tones so that they can be fed to different modulators 805, 806. The modulated signals are then polarization multiplexed using the PBS 809. Depending on the type of modulator used, a bandpass filter may be provided after the PBS 809 to remove any image bands that are generated by the modulation of the OFDM bands. At the receiver, the signal can hit the PBS 812 at random polarization as each polarization tributary has its own optical carrier.

This approach is more robust than the conventional PBS method, because it does not require any active control of the polarization at the receiver. However, as indicated in Fig.8, several optical components are required at the transmitter, which impairs the cost-effectiveness and thereby the applicability for this method to be used in cost-sensitive metro applications. Also, twice the optical guard band may be required between the OFDM signal and the optical carriers to the left and right of the OFDM signal. This may reduce the obtainable spectral efficiency by approximately 50%. Hence, realizing 100 Gb Ethernet at a 50-GHz channel spacing is difficult to achieve with the approach pursuant to Fig.8 as high(er) constellation orders will be required to reduce the OFDM bandwidth so that it will fit within the 50-GHz grid.

The approach suggested herein in particular enables PDM-OFDM by using a frequency shift at the transmitter.

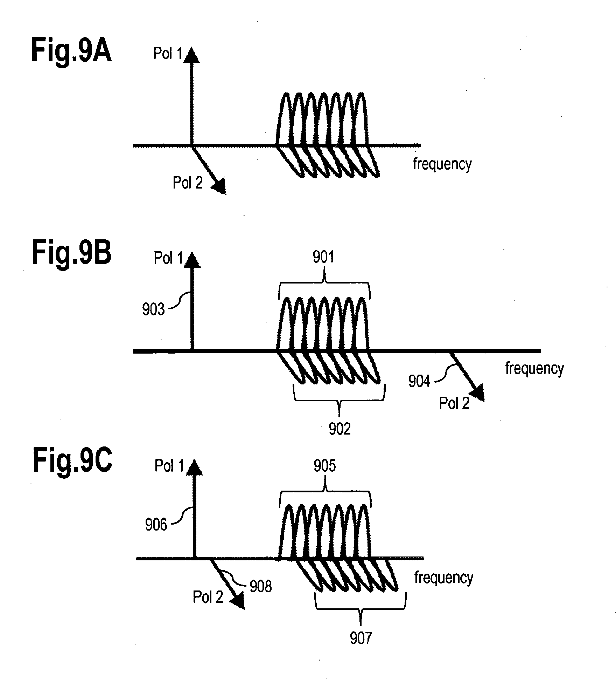

**Fig.9A** to **Fig.9C** show different optical spectra of two polarizations ("Pol 1" and "Pol 2") that may in particular be used for PDM in the area of DDO-OFDM.

A conventional PDM technique is visualized in **Fig.9A**, wherein optical carriers for both polarizations Pol 1 and Pol 2 are located at exactly the same frequency. Hence, exact alignment of the polarization with the PBS at the receiver is required.

The approach described in Fig.8 above corresponds to the scenario visualized in **Fig.9B**. Each OFDM signal 901, 902 have its own optical carrier 903, 904, which are mirrored with respect to the center of the OFDM signals 901, 902. This approach does not require polarization alignment, but it requires many components at the transmitter to create the signal.

Pursuant to **Fig.9C**, a frequency shifted PDM is used. Here, an OFDM signal 905 (of a first polarization) and its carrier 906 is shifted by a (small) frequency offset with regard to an OFDM signal 907 (of a second polarization) and its carrier 908 (or vice versa). Hence, no polarization alignment is required at the receiver.

In order to de-correlate the optical carriers 906, 908 of both polarizations, the frequency shift may be larger than the linewidth of the laser.

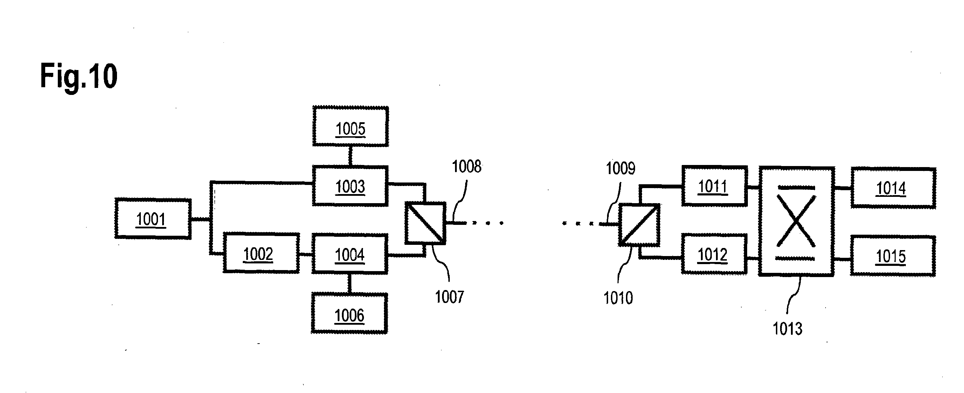

**Fig.10** shows a schematic block diagram visualizing an exemplary implementation of a frequency-shifted PDM-DDO-OFDM.

A laser diode 1001 provides a light signal that is conveyed to a modulator 1003 and to an acousto-optic modulator 1002, which output is connected to a modulator 1004. The output signals of the modulators 1003, 1004 are combined by a PBS 1007 to a modulated signal 1008 that is fed to a transmission line (e.g., fiber). A signal of a baseband transmitter 1005 is fed to the modulator 1003 and a signal of a baseband transmitter 1006 is fed to the modulator 1004 in order to modulate electrical signals onto the light signal provided by the laser diode 1001.

At the receiver, an incoming signal 1009 is fed to a PBS 1010 and conveyed to photodiodes 1011 and 1012, wherein the electrical signal of the photodiodes 1011, 1012 is fed to a MIMO processing stage 1013, which conveys the processed signals to a receiver 1014 and to a receiver 1015.

Hence, two OFDM signals (provided by the baseband transmitters 1005, 1006) are modulated onto optical carriers and multiplexed onto orthogonal polarizations by the PBS 1007. The frequency shift between the polarizations is provided via the acousto-optic modulator 1002, which can be inserted before or after one of the optical modulators 1003, 1004. The acousto-optic modulator 1002 may provide a frequency shift of several tens of megahertz, which may suffice to separate the frequencies of the two polarizations.

It is an advantage of this approach that no polarization needs to be tracked at the receiver. In addition, without such need for alignment of active polarizations, the operation is robust and stable. Also, the implementation is cost-efficient and spectrally efficient. In case a guard band is required between the optical carrier and the OFDM signal, only one such guard band is needed.

### List of Abbreviations:

- ADC: analog-to-digital converter
- AOM: acousto-optic modulator
- CD: chromatic dispersion
- CMA: constant modulus algorithm
- CO-POLMUX: carrier-offset POLMUX
- CPE: carrier phase estimation
- CW: continuous wave
- DAC: digital-to-analog converter
- DDO: direct detection optical
- DGD: differential group delay
- DPSK: differential phase shift keying
- DQPSK: differential QPSK
- DSP: digital signal processor
- FDE: frequency domain equalization
- FFT: fast Fourier transform
- Gbps: gigabit per second
- IFFT: inverse FFT
- INT: interleaver
- LD: laser diode
- LMS: least mean square
- LO: local oscillator
- MIMO: multiple-input multiple-output
- MOD: modulator
- MZDLI: Mach-Zehnder delay interferometer
- MZM: Mach-Zehnder modulator
- NRZ: non-return-to-zero
- OFDM: orthogonal frequency division multiplexing
- PBS: polarization beam splitter
- PD: photodiode
- PDM: polarization division multiplexing
- PMD: polarization mode dispersion
- POLMUX: polarization multiplexing
- QAM: quadrature amplitude modulation
- QPSK: quadrature phase shift keying
- RF: radio-frequency
- RX: receiver
- RZ: return-to-zero
- SNR: signal-to-noise ratio
- TDE: time domain equalization
- TX: transmitter

## Claims

1. A method for data processing in an optical communication network,
- wherein a first optical carrier (906) of a first polarization and a second optical carrier (908) of a second polarization are provided at different frequencies;
wherein the first carrier (906) and the second carrier (908) are part of a modulation utilizing polarization multiplexing, and the first carrier (906) is associated with a first OFDM signal (905) and the second carrier (908) is associated with a second OFDM signal (907);
**characterized in that** the first carrier (906) and the second carrier (908) are located within the spectrum on the same side with regard to the first OFDM signal (905) and the second OFDM signal (907).

2. The method according to claim 1, wherein the carriers (906, 908) of different frequencies are provided each by a separate light source (501, 503).

3. The method according to claim 1, wherein the carriers of different frequencies are provided by a single light source (101, 1001) wherein the light signal of the single light source (101, 1001) is split into two parts,
- wherein to the first part of the light signal a linear increasing phase shift over time can be added in particular by a first Mach-Zehnder modulator; and
- wherein to the second part of the light signal a linear decreasing phase shift over time can be added in particular by a second Mach-Zehnder modulator.

4. The method according to claim 1, wherein the frequency shift between the first carrier (906) and the second carrier (908) is provided by an acousto-optic modulator (1002).

5. The method according to any of the preceding claims, wherein a frequency of a local oscillator (207) at a receiver is adjusted substantially at or around the middle between the first carrier frequency and the second carrier frequency.

6. The method according to claim 5, wherein information regarding the frequency of the local oscillator (207) is conveyed to the receiver.

7. The method according to any of the preceding claims, wherein the first carrier (906) and the second carrier (908) are utilized for DDO-OFDM.

8. The method according to any of the preceding claims, wherein the frequency shift between the first carrier (906) and the second carrier (908) is larger than a linewidth of a signal provided by an optical light source, in particular a laser.

9. An optical network element comprising
- at least one component adapted to provide a first optical carrier (906) of a first polarization and a second optical carrier (908) of a second polarization at different frequencies,
wherein the first carrier (906) and the second carrier (908) are part of a modulation utilizing polarization multiplexing, wherein the first carrier (906) is associated with a first OFDM signal (905) and the second carrier (908) is associated with a second OFDM signal (907);
**characterized in that** the optical network element is adapted to provide the first carrier (906) and the first OFDM signal (905) and to provide the second carrier (908) and the second OFDM signal (907) such that the first carrier (906) and the second carrier (908) are located within the spectrum on the same side with regard to the first OFDM signal (905) and the second OFDM signal (907).

10. The device according to claim 9, wherein the at least one component comprises:
- a delay element, in particular an acousto-optic modulator (1002), within a branch of a modulator (1004), in particular of a Mach-Zehnder modulator.

11. The device according to any of claims 9 or 10, wherein said device is a transmitter of the optical network.

## Patentansprüche

1. Verfahren zum Verarbeiten von Daten in einem optischen Kommunikationsnetzwerk, wobei ein erster optischer Träger (906) mit einer ersten Polarisation und einer zweiter optischer Träger (908) mit einer zweiten Polarisation bei unterschiedlichen Frequenzen bereit gestellt werden, wobei der erste Träger (906) und der zweite Träger (908) Bestandteil einer Modulation sind, welche Polarisierungs-Multiplexing verwendet, und wobei der erste Träger (906) einem ersten OFDM-Signal (905) zugehörig ist und der zweite Träger (908) einem zweiten OFDM-Signal (907) zugehörig ist;
**dadurch gekennzeichnet, dass** der erste Träger (906) und der zweite Träger (908) innerhalb des Spektrums auf derselben Seite bezüglich des ersten OFDM-Signals (905) und des zweiten OFDM-Signals (907) angeordnet sind.

2. Verfahren nach Anspruch 1, bei welchem die Träger (906, 908) der unterschiedlichen Frequenzen jeweils durch unterschiedliche Lichtquellen (501, 503) bereitgestellt werden.

3. Verfahren nach Anspruch 1, bei welchem die Träger der unterschiedlichen Frequenzen durch eine einzelne Lichtquelle (101, 1001) bereitgestellt werden, wobei das Lichtsignal der einzelnen Lichtquelle (101, 1001) in zwei Bestandteile aufgespalten wird, wobei
- dem ersten Bestandteil des Lichtsignals eine mit der Zeit linear zunehmende Phasenverschiebung hinzugefügt werden kann, insbesondere mittels eines ersten Mach-Zehnder-Modulators; und
- dem zweiten Bestandteil des Lichtsignals eine mit der Zeit linear abnehmende Phasenverschiebung hinzugefügt werden kann, insbesondere mittels eines zweiten Mach-Zehnder-Modulators.

4. Verfahren nach Anspruch 1, bei welchem die Frequenzverschiebung zwischen dem ersten Träger (906) und dem zweiten Träger (908) mittels eines akustisch-optischen Modulators (1002) bereitgestellt wird.

5. Verfahren nach einem der vorangehenden Ansprüche, bei welchem eine Frequenz eines lokalen Oszillators (207) an einem Empfänger im Wesentlichen bei oder in der Umgebung der Mitte zwischen der ersten Trägerfrequenz und zweiten Trägerfrequenz eingestellt wird.

6. Verfahren nach Anspruch 5, bei welchem Informationen bezüglich der Frequenz des lokalen Oszillators (207) an den Empfänger übermittelt werden.

7. Verfahren nach einem der vorangehenden Ansprüche, bei welchem der erste Träger (906) und der zweite Träger (908) für ein DDO-OFDM-Verfahren verwendet werden.

8. Verfahren nach einem der vorangehenden Ansprüche, bei welchem die Frequenzverschiebung zwischen dem ersten Träger (906) und dem zweiten Träger (908) größer ist als eine Linienbreite eines Signals, welches mittels einer optischen Lichtquelle, insbesondere eines Lasers, bereitgestellt wird.

9. Optisches Netzwerkelement mit wenigstens einer Komponente, welche dazu eingerichtet ist, einen ersten optischen Träger (906) mit einer ersten Polarisation und einen zweiten optischen Träger (908) mit einer zweiten Polarisation bei unterschiedlichen Frequenzen bereitzustellen, wobei der erste Träger (906) und der zweite Träger (908) Bestandteil einer Modulation, welche Polarisierungs-Multiplexing verwendet, sind, wobei der erste Träger (906) einem ersten OFDM-Signal (905) zugehörig ist und der zweite Träger (908) einem zweiten OFDM-Signal (907) zugehörig ist;
**dadurch gekennzeichnet, dass** das optische Netzwerkelement dazu eingerichtet ist, den ersten Träger (906) und das erste OFDM-Signal (905) sowie den zweiten Träger (908) und des zweite OFDM-Signal (907) bereitzustellen, so dass der erste Träger (906) und der zweite Träger (908) innerhalb des Spektrums auf derselben Seite bezüglich des ersten OFDM-Signals (905) und des zweiten OFDM-Signals (907) angeordnet sind.

10. Vorrichtung nach Anspruch 9, bei welcher die wenigstens eine Komponente ein Verzögerungselement, insbesondere einen akustisch-optischen Modulator (1002), innerhalb eines Zweigs eines Modulators (1004), insbesondere eines Mach-Zehnder-Modulators, umfasst.

11. Vorrichtung nach einem der Ansprüche 9 oder 10, bei welcher die Vorrichtung ein Sender des optischen Netzwerks ist.

## Revendications

1. Procédé de traitement de données dans un réseau de communication optique,
dans lequel une première porteuse optique (906) d'une première polarisation et une seconde porteuse optique (908) d'une seconde polarisation sont délivrées à différentes fréquences ;
où la première porteuse (906) et la seconde porteuse (908) font partie d'une modulation utilisant un multiplexage de polarisation, et la première porteuse (906) est associée à un premier signal OFDM (905) et la seconde porteuse (908) est associée à un second signal OFDM (907) ;
**caractérisé en ce que** la première porteuse (906) et la seconde porteuse (908) sont situées dans le spectre du même côté par rapport au premier signal OFDM (905) et au second signal OFDM (907).

2. Procédé selon la revendication 1, dans lequel les porteuses (906, 908) de fréquences différentes sont délivrées, chacune, par une source de lumière séparée.

3. Procédé selon la revendication 1, dans lequel les porteuses de fréquences différentes sont délivrées par une source de lumière unique (101, 1001) où le signal lumineux de la source de lumière unique (101, 1001) est divisé en deux parties,
où un déphasage croissant linéaire dans le temps peut être ajouté à la première partie du signal lumineux, en particulier par un premier modulateur Mach-Zehnder ; et
où un déphasage décroissant linéaire dans le temps peut être ajouté à la seconde partie du signal lumineux, en particulier par un second modulateur Mach-Zehnder.

4. Procédé selon la revendication 1, dans lequel le décalage de fréquence entre la première porteuse (906) et la seconde porteuse (908) est fourni par un modulateur acousto-optique (1002).

5. Procédé selon l'une quelconque des revendications précédentes, dans lequel une fréquence d'un oscillateur local (207) au niveau d'un récepteur est réglée sensiblement au milieu, ou autour du milieu, entre la fréquence de la première porteuse et la fréquence de la seconde porteuse.

6. Procédé selon la revendication 5, dans lequel des informations concernant la fréquence de l'oscillateur local (207) sont transmises au récepteur.

7. Procédé selon l'une quelconque des revendications précédentes, dans lequel la première porteuse (906) et la seconde porteuse (908) sont utilisées pour un multiplexage DDO-OFDM.

8. Procédé selon l'une quelconque des revendications précédentes, dans lequel le décalage de fréquence entre la première porteuse (906) et la seconde porteuse (908) est plus grand qu'une largeur de ligne d'un signal délivré par une source de lumière optique, en particulier un laser.

9. Élément de réseau optique comprenant :
au moins un composant conçu pour délivrer une première porteuse optique (906) d'une première polarisation et une seconde porteuse optique (908) d'une seconde polarisation à différentes fréquences,
où la première porteuse (906) et la seconde porteuse (908) font partie d'une modulation utilisant un multiplexage de polarisation, où la première porteuse (906) est associée à un premier signal OFDM (905) et la seconde porteuse (908) est associée à un second signal OFDM (907) ;
**caractérisé en ce que** l'élément de réseau optique est conçu pour délivrer la première porteuse (906) et le premier signal OFDM (905) et pour délivrer la seconde porteuse (908) et le second signal OFDM (907) de manière à ce que la première porteuse (906) et la seconde porteuse (908) soient situées dans le spectre du même côté par rapport au premier signal OFDM (905) et au second signal OFDM (907).

10. Dispositif selon la revendication 9, dans lequel l'au moins un composant comprend :
un circuit à retard, en particulier un modulateur acousto-optique (1002), dans une branche d'un modulateur (1004), en particulier d'un modulateur Mach-Zehnder.

11. Dispositif selon l'une quelconque des revendications 9 à 10, dans lequel ledit dispositif est un émetteur du réseau optique.
